(19) Europäisches Patentamt

European Patent Office

Office européen des brevets

(11) **EP 1 037 129 A1**

(12) **EUROPEAN PATENT APPLICATION**

(43) Date of publication:
 **20.09.2000 Bulletin 2000/38**

(51) Int. Cl.$^7$: **G05D 1/02**

(21) Application number: **00301786.0**

(22) Date of filing: **03.03.2000**

(84) Designated Contracting States:
 **AT BE CH CY DE DK ES FI FR GB GR IE IT LI LU MC NL PT SE**
 Designated Extension States:
 **AL LT LV MK RO SI**

(30) Priority: **05.03.1999 US 263163**

(71) Applicant:
 **Nomadic Technologies, Inc.
 Mountain View, CA 94043-1605 (US)**

(72) Inventors:
 • **Slater, James C.
  Mountain View, California 94043 (US)**
 • **Legrand, Richard M.
  Mountain View California 94040 (US)**
 • **Holmberg, Robert
  Mountain View, California 94040 (US)**

(74) Representative:
 **Jackson, David Spence
 REDDIE & GROSE
 16, Theobalds Road
 London, WC1X 8PL (GB)**

(54) **Method and apparatus for mobile robot motion control**

(57)  A mobile robot base movable relative to a surface, comprising: at least two wheels pivotably and rotatably mounted to the base, each wheel having a steering axis and a rotation axis; drive means for rotating the wheels along the surface; steering means for pivoting the wheels with respect to the surface; and controller means for controlling the motion of the base, wherein the controller means includes means for reading an input motion vector from a host processor, mapping the input vector to a desired axis motion vector for each of the axes (Fig. 3), calculating a control envelope for each of the axes, determining whether the axis motion vector lies within the control envelope for each of the axes (Fig. 3), calculating a modified axis motion vector when the axis motion vector does not lie within the control envelope (Fig. 3), sending the axis motion vector or modified axis motion vector to an axis controller for each of the axes (Fig. 3), estimating a motion of the base traveled during a discrete time interval delta t (Fig. 3), calculating a position and an orientation of the base in a set of world coordinates (Fig. 3), and repeating the previous steps continuously until commanded to stop (Fig. 3). Other aspects include a holonomic base capable of instantaneous movement in any direction without reconfiguring the wheel headings, regardless of the configuration of the wheels. Also, a method of using forces and torques to control the base, and to compensate for undesired motions of the base due to dynamic effects of the wheel motions is disclosed.

FIG. 3

## Description

### Field of the Invention

The present invention relates generally to manned or unmanned omni-directional, normal-wheeled vehicles. More precisely, this invention involves a method and apparatus for controlling the motion of mobile base used as a vehicle.

### Background of the Invention

Mobile bases with intended applications in robotics and industrial automation require a great deal of movement flexibility in order to be fully utilized. Current robot mobile bases often employ a "synchro-drive" mechanism—a complex set of gears and pulleys that constrains the wheels to steer and to translate simultaneously. Since steering and translation movement is fully decoupled in this system, "steering in place" is possible. (Contrast this maneuverability with that of a car.) While this allows a good deal of maneuverability, its mechanical complexity makes it difficult and expensive to manufacture. Additionally, this type of mobile base has limited movement due to its fixed orientation (i.e. its inability to rotate).

In general, a rigid body constrained to move in a plane (i.e. a mobile base moving on the floor) has three degrees of freedom (DOFs) such as, movement in the x direction, movement in the y direction and rotation. Combining these three DOFs results in movement in any direction while simultaneously rotating.

A *holonomic* mobile base, has the ability move in this manner and change its motion at any time. By constructing a mobile base out of wheels that each have two degrees of freedom (one for steering, one for translation) all three DOFs are possible under the proper control, and complex mechanisms found in synchro-drive mobile bases are no longer needed. Additionally, these 2-DOF wheels (2-DOFWs) can be easily integrated and manufactured as modular wheel assemblies. A complete description of one example of a robot base and modular wheel assembly is provided by U.S. Patent Application 09/134,241, by Holmberg et al., incorporated herein by reference.

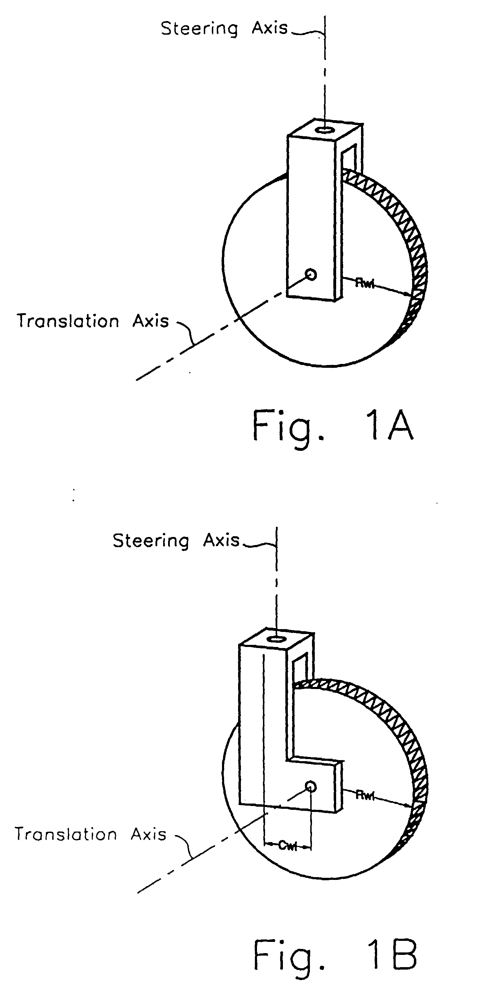

It is also possible to increase the "caster" of a 2-DOFW by moving the translation axis behind the steering axis (Figure 1) and making it resemble a caster wheel. Unlike a 2-DOFW wheel with no caster (i.e. intersecting steering and translation axes), a mobile base constructed with caster 2-DOFWs is fully holonomic under the proper control.

Various problems arise, however, when trying to control a mobile base constrained to three DOFs with more than three controllable DOFs (e.g. a base with four 2-DOFWs has eight DOFs). A base with this many DOFs under improper control will certainly result in undesired motion and motor axes that "fight" each other. (i.e. consider two wheels facing opposite directions playing tug-of-war.)

This in turn creates wheel slippage, increased tire wear, increased power consumption, and more frequent mechanical problems.

It is considered important in robotics to be able to accurately assess the motion of the mobile base either through direct measurement or through estimation. This motion estimation can also be "summed-up" over time to create a "dead reckoned" position estimate of the mobile base with respect to fixed coordinates, which is also useful for autonomous tasks such as navigation. That is, consider a robot that wishes to navigate to a location (room) of which it knows the x-y coordinates. Motion estimation is also responsible for proper control of the mobile base, as will be described below. A control algorithm which minimizes wheel slippage will also allow for maximum motion estimation accuracy.

### Summary of the Invention

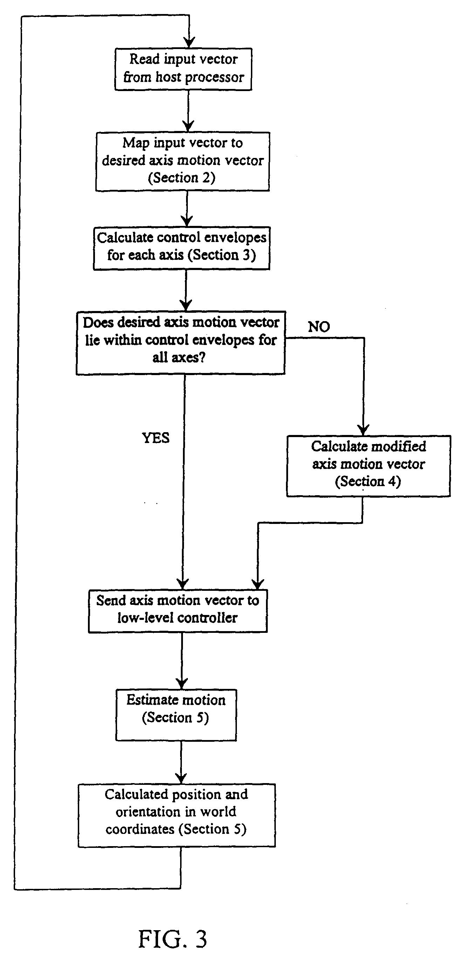

The present invention overcomes the deficiencies in the prior art described above, and provides motion control for a mobile robot base that is more accurate and more maneuverable Referring to Figure 3 and the Detailed Description of the Preferred Embodiments, an overview of the inventive control sequence is provided in the following paragraph.

A supervisory controller reads the input vector from a host processor, and maps the input vector to the desired axis motion vector (i.e. the desired motion of each axis) by using the equations in Section 2 below. It then predicts if the axes are capable of the desired motion by calculating their control envelopes (i.e. the motion possible within one control cycle $\Delta t$.) as described in Section 3. If all axes are capable of the desired motion within one control cycle the desired axis motion vector is passed to the low-level controller. If one or more axes are incapable of the desired motion, a modified axis motion vector is calculated as described in Section 4 and passed to the low-level controller. The modified axis motion vector lies within the control envelopes of all 2N axes while minimizing control error (i.e. the difference between the commanded input vector and the actual base motion.) The control algorithm then estimates the motion of the mobile base since the last control cycle using the technique described in Section 5. The estimated motion is then used to update the position and orientation $[x_B, y_B, \psi_B]^T$ of the base coordinate frame in the fixed world coordinate frame as described also in Section 5. The updated position and orientation is then made available for the host processor to read. The control algorithm then repeats the whole process by beginning another control cycle.

**Brief Description of the Drawings**

Figure 1A is a perspective view showing a mobile base wheel with no caster offset.
Figure 1B is a perspective view showing a mobile base wheel with a caster offset.
Figure 2 is a schematic diagram showing the flow of command information which controls the motion of the mobile base.
Figure 3 is a schematic diagram showing the steps of a method for controlling the motion of the mobile base.
Figure 4 is a perspective view schematically showing the layout of the mobile base wheels and the base and world coordinate systems.

**Detailed Description of the Preferred Embodiments**

Section 1 - Overview of the Control Algorithm

Referring to Table 1, a description of notations and variables used herein is provided.

**Table 1**

| | |
|---|---|
| $N$ | Number of wheels |
| $[x_{Wi}, y_{Wi}]^T$ | Cartesian position of wheel attachment point of 2-DOFW $i$ to the base in base coordinates (m, m) - |
| $[x'_{Wi}, y'_{Wi}]^T$ | Cartesian position of wheel attachment point of 2-DOFW $i$ to the base in base coordinates as it has changed since the previous control cycle using the coordinates of the previous control cycle (m, m) |
| $\theta_{mWi}$ | Measured steer angle of 2-DOFW $i$ (rad) |
| $\theta_{dWi}$ | Desired steer angle of 2-DOFW $i$ (rad) |
| $\bar{m}_d$ | Input vector (IV), or desired mobile base motion in base coordinates read from host processor (m/s, m/s, rad/s), (m/s$^2$, m/s$^2$, rad/s$^2$), or (N, N, Nm) dependant on desired implementation |
| $\bar{m}_x = [\dot{x}, \dot{y}, \dot{\psi}]^T$ | Actual mobile base motion in base coordinates (m/s, m/s, rad/s) |
| $\bar{m}_e = [\dot{x}_e, \dot{y}_e, \dot{\psi}_e]^T$ | Estimated mobile base motion in base coordinates calculated as described in Section 5 (m/s, m/s, rad/s) |
| $\Delta m_e = [\Delta x_e, \Delta y_e, \Delta \psi_e]^T$ | Estimated change in mobile base position in base coordinates calculated as described in Section 5 (m, m, rad) |
| $\bar{m}_l(\lambda)$ | Possible mobile base motion decomposed along parametric line with parameter $\lambda$ (m/s, m/s, rad/s) (Section 4) |
| $\bar{m}_m$ | Modified mobile base motion (m/s, m/s, rad/s) |
| $\bar{m}_a$ | Axis motion vector (AMV) of length 2N. (Type of wheel (caster or no caster) and type of low level controller determines units) |
| $\delta$ | Small increment much less than 1.0 (0.1 nominal) (Section 4) |
| $[\dot{x}_{dWi}, \dot{y}_{dWi}]^T$ | Desired velocity vector of attachment point of 2-DOFW $i$ to the base in base coordinates (m/s, m/s) |

| | |
|---|---|
| $\dot{\mu}_{dWi}$ | Desired velocity magnitude of 2-DOFW $i$ (m/s) |
| $s_{dWi}$ | Desired steering axis position for 2-DOFW $i$ (encoders) |
| $s_{mWi}$ | Measured steering axis position for 2-DOFW $i$ (encoders) |
| $\grave{s}_{mWi}$ | Measured steering axis position for 2-DOFW $i$ in the previous control cycle (encoders) |
| $\Delta s_{mWi}$ | Measured change in steering axis position for 2-DOFW $i$ since the previous control cycle (m) |
| $\dot{s}_{dWi}$ | Desired steering axis velocity for 2-DOFW $i$ (encoders/s) |
| $\dot{s}_{mWi}$ | Measured steering axis velocity for 2-DOFW $i$ (encoders/s) |
| $\dot{s}_{maxWi}$ | Maximum steering axis velocity for 2-DOFW $i$ (encoders/s) |
| $\ddot{s}_{maxWi}$ | Maximum steering axis acceleration for 2-DOFW $i$ (encoders/s$^2$) |
| $s_{lWi}$ | Lower-bound steering axis position for 2-DOFW $i$ within $\Delta t$ time (encoders) |
| $s_{uWi}$ | Upper-bound steering axis position for 2-DOFW $i$ within $\Delta t$ time (encoders) |
| $\dot{s}_{lWi}$ | Lower-bound steering axis velocity for 2-DOFW $i$ within $\Delta t$ time (encoders/s) |
| $\dot{s}_{uWi}$ | Upper bound steering axis velocity for 2-DOFW $i$ within $\Delta t$ time (encoders/s) |
| $t_{mWi}$ | Measured translation axis position for 2-DOFW $i$ (encoders) |
| $\grave{t}_{mWi}$ | Measured translation axis position for 2-DOFW $i$ in the previous control cycle (encoders) |
| $\Delta t_{mWi}$ | Measured change in translation axis position for 2-DOFW $i$ since the previous control cycle (m) |
| $\dot{t}_{dWi}$ | Desired translation axis velocity for 2-DOFW $i$ (encoders/s) |
| $\dot{t}_{mWi}$ | Measured translation axis velocity for 2-DOFW $i$ (encoders/s) |
| $\dot{t}_{maxWi}$ | Maximum translation axis velocity for 2-DOFW $i$ (encoders/s) |
| $\ddot{t}_{maxWi}$ | Maximum translation axis acceleration for 2-DOFW $i$ (encoders/s$^2$) |
| $\dot{t}_{lWi}$ | Lower-bound translation axis velocity for 2-DOFW $i$ within $\Delta t$ time (encoders/s) |
| $\dot{t}_{uWi}$ | Upper-bound translation axis velocity for 2-DOFW $i$ within $\Delta t$ time (encoders/s) |

| $r_{Wi}$ | Radius of 2-DOFW $i$ (m) |
|---|---|
| $\sigma_{Wi}$ | Steering axis encoder pitch for 2-DOFW $i$ (encoders/rad) |
| $\tau_{Wi}$ | Translation axis encoder pitch for 2-DOFW $i$ (encoders/rad) |
| $c_{Wi}$ | Amount of caster for 2-DOFW $i$ (m) |
| $\Delta t$ | Time elapsed during a control cycle (s) |
| $[x_{eB}, y_{eB}, \psi_{eB}]^T$ | Estimated position and orientation of the base coordinate frame (i.e. coordinates that are fixed with respect to the mobile base and move with the mobile base) in fixed world coordinates (i.e. coordinates that are fixed with respect to the floor on which the mobile base moves) (m, m, rad) |
| $C$ | Constraint matrix which maps mobile base motion to axis speeds [2N x 3] |
| $C_f^\#$ | The Force Projection Matrix which is the particular generalized inverse of the $C$ matrix which is used to map the desired motion vector to the actuator control torques [3 x 2N] |
| $C_x^\#$ | The Velocity Estimation Matrix which is the particular generalized inverse of the $C$ matrix which is used to map actuator speeds to base speeds [3 x 2N] |
| $\Lambda$ | The base mass matrix [3 x 3] |
| $\mu$ | The base centripetal, coriolis, and gravity vector [3 x 1] |
| $\gamma_{dWi}$ | Desired steering axis torque for 2-DOFW $i$ (N·m) |
| $\gamma_{lWi}$ | Lower-bound steering axis torque for 2-DOFW $i$ (N·m) |
| $\gamma_{uWi}$ | Upper-bound steering axis torque for 2-DOFW $i$ (N·m) |
| $\rho_{dWi}$ | Desired translation axis torque for 2-DOFW $i$ (N·m) |
| $\rho_{lWi}$ | Lower-bound translation axis torque for 2-DOFW $i$ (N·m) |
| $\rho_{uWi}$ | Upper-bound translation axis torque for 2-DOFW $i$ (N·m) |

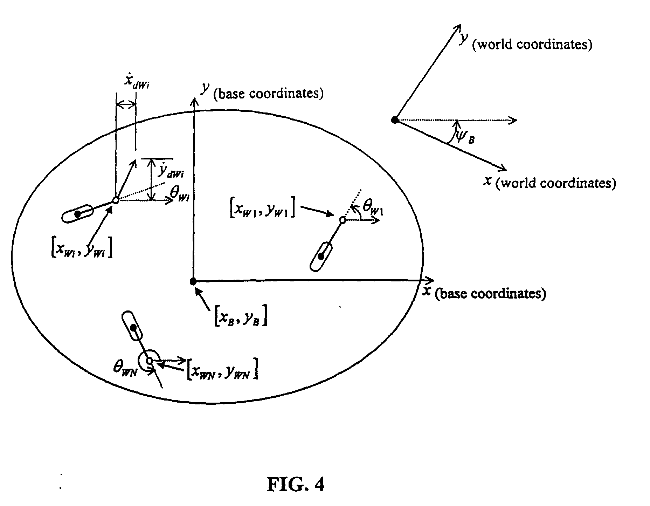

Referring to Figures 1A and 1B, a mobile base constructed according to the present invention includes as many two degrees of freedom wheels (2-DOFWs) as deemed necessary ($N \geq 2$, where $N$ is the number of 2-DOFWs). All of the wheels are mounted on the mobile base which is a rigid platform (depicted in Figure 4.). Each 2-DOFW has two independent axes, one for steering and one for translation. Figure 1A shows an example of a 2-DOFW with no caster, i.e. $c_{Wi} = 0$, such that the steering and translation axes intersect. Figure 1B shows an example of a 2-DOFW having a caster offset, i.e. $c_{Wi} \neq 0$. In other words, the steering axis is offset from the translation axis by $c_{Wi}$. Each of the 2-DOFWs on the mobile base can have a different amount of caster if necessary.

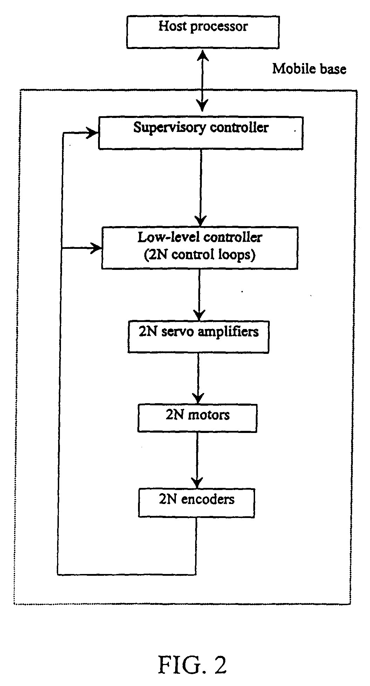

Referring to Figure 2, a schematic diagram shows the flow of command information which controls the motion of the mobile base. Since each of the N wheels has two axes (i.e. steering and translation), the mobile base has a total of 2N axes. Controlling the 2N axes of the mobile base are 2N servo amplifiers connected to a set of low-level controllers that perform closed-loop, high servo-rate control of all axis positions. Positional feedback of each axis is provided by an accurate encoding scheme. A supervisory controller interfaced to the low-level controllers coordinates all 2N axes by sending position updates to the low-level controllers at each discrete control cycle. The position updates are calculated by the control algorithm which takes into account the mobile base geometry, motor dynamics, and a 3-DOF input vector sent from a host processor interfaced to the supervisory controller. The 3-DOF input vector completely describes the desired velocity-based motion of the mobile base, which is constrained to move within three DOFs as described previously. A possible input vector, for example, consists of an x-velocity, y-velocity, and rotational velocity with respect to the center of the mobile base, or alternatively, angle, magnitude, and rotational velocity with respect to a random fixed point (i.e. the representation is arbitrary as long as the axes of the input vector are independent.)

The control algorithm is optimal in that it controls the 2N axes such that the mobile base moves as commanded by the input vector as accurately and as quickly as possible within the physical limits of the motors.

For example, if a motor is commanded beyond what it is physically capable of (i.e. it is commanded beyond its "saturation point") while other motors are commanded to within their physical limits, wheel slippage occurs. The control algorithm is able to predict this situation and correct it before it occurs. It accomplishes this by anticipating velocity or torque and saturation points with working models of each motor axis. Thus, the control algorithm simultaneously minimizes wheel slippage and minimizes the difference between desired motion specified by the input vector and actual mobile base motion (motion error).

Section 2 - Mapping the Input Vector to the Desired Axis Motion Vector

This determines the axis motion vector (AMV), $\vec{m}_a$, which is the motion required at each 2-DOFW and the corresponding motion at each axis such that the mobile base moves according to the commanded input vector (i.e. $[\dot{x}_d, \dot{y}_d, \dot{\psi}_d]^T$). Thus, the mapping is from $\Re^3$ to $\Re^{2N}$. It is accomplished by first calculating the desired velocity to each wheel attachment point as below. The desired wheel velocity for each wheel is expressed as a 2-vector $[\dot{x}_{dWi}, \dot{y}_{dWi}]^T$ in base coordinates (Figure 4). ($\forall i: 1 \le i \le N$) (i.e. for all wheels i):

$$\dot{x}_{dWi} = \dot{x}_d - y_{wi}\dot{\psi}_d$$

$$\dot{y}_{dWi} = \dot{y}_d + x_{wi}\dot{\psi}_d$$

where the $[x_{Wi}, y_{Wi}]^T$ are the Cartesian coordinates of the wheel attachment point of each 2-DOFW $i$ to the base in base coordinates (m, m).

The steering angle ($\theta_{mWi}$) for each 2-DOFW is measured based on the raw measured encoder value of the steering axis ($s_{mWi}$) and the encoder pitch ($\sigma_{Wi}$):

$$\theta_{mWi} = \frac{S_{mWi}}{\sigma_{Wi}}$$

and will be used in many of the following calculations.

These desired wheel velocities are then mapped to the two axes of the 2-DOFW. For 2-DOFWs with no caster ($c_{Wi} = 0$) the desired steering axis position and desired translation axis velocity $[s_{dWi}, \dot{t}_{dWi}]$ are calculated for each 2-DOFW as follows:

$$\theta_{dWi} = \arctan2(\dot{y}_{dWi}, \dot{x}_{dWi})$$

$$\dot{\mu}_{dWi} = \sqrt{\dot{x}_{dWi}^2 + \dot{y}_{dWi}^2}$$

$$s_{dWi} = \sigma_{Wi}\theta_{dWi}$$

$$\dot{i}_{dWi} = \frac{\tau_{Wi}}{r_{Wi}}\dot{\mu}_{dWi}$$

with

$$\bar{m}_a = \left[s_{dW1}, i_{dW1}, \ldots, s_{dWi}, i_{dWi}, \ldots, s_{dWN}, i_{dWN}\right]^T$$

where

$\theta_{dWi}$ is the desired steering angle for 2-DOFW $i$,
$\sigma_{Wi}$ is the steering axis "encoder pitch" for 2-DOFW $i$ expressed in encoders per radian, and
$\dot{\mu}_{dWi}$ is the desired velocity magnitude for wheel $i$

When using a velocity based low level controller for 2-DOFWs with caster ($c_{Wi} \neq 0$) the desired steering axis velocity and desired translation axis velocity [$\dot{s}_{dWi}, \dot{i}_{dWi}$] are calculated for each 2-DOFW as below.

$$\dot{s}_{dWi} = \frac{\sigma_{Wi}}{c_{Wi}}\left(\dot{y}_{dWi}\cos(\theta_{mWi}) - \dot{x}_{dWi}\sin(\theta_{mWi})\right) - \dot{\psi}$$

$$\dot{i}_{dWi} = \frac{\tau_{Wi}}{r_{Wi}}\left(\dot{x}_{dWi}\cos(\theta_{mWi}) + \dot{y}_{dWi}\sin(\theta_{mWi})\right)$$

with

$$\bar{m}_a = \left[\dot{s}_{dW1}, i_{dW1}, \ldots, \dot{s}_{dWi}, i_{dWi}, \ldots, \dot{s}_{dWN}, i_{dWN}\right]^T$$

where

$c_{Wi}$ is the amount of caster offset in meters,
$\tau_{Wi}$ is the encoder pitch for 2DOFW $i$ expressed in encoders per radians, and
$r_{Wi}$ is the radius of the 2DOFW i

When using a torque based low level controller for 2-DOFWs with caster ($c_{Wi} \neq 0$) the desired steering axis torque and desired translation axis torque [$\gamma_{dWi}, \rho_{dWi}$]$^T$ are calculated for each 2-DOFW as below. First, gather coefficients of the base velocities from the previous equations used in the development of the velocity controller into the constraint matrix, $C$. The constraint matrix is defined by the ideal kinematic relationship:

$$\bar{m}_a = C\bar{m}_x$$

where $\bar{m}_a$ is the motion axis vector and $\bar{m}_x$ is the actual mobile base motion. The constraint matrix for the preferred embodiment is:

$$C = \begin{bmatrix}
-\dfrac{\sigma_{W1}}{c_{W1}}\sin(\theta_{mW1}) & \dfrac{\sigma_{W1}}{c_{W1}}\cos(\theta_{mW1}) & \dfrac{\sigma_{W1}}{c_{W1}}\left(x_{W1}\cos(\theta_{mW1}) + y_{W1}\sin(\theta_{mW1})\right) - 1 \\[2ex]
\dfrac{\tau_{W1}}{r_{W1}}\cos(\theta_{mW1}) & \dfrac{\tau_{W1}}{r_{W1}}\sin(\theta_{mW1}) & \dfrac{\tau_{W1}}{r_{W1}}\left(x_{W1}\sin(\theta_{mW1}) - y_{W1}\cos(\theta_{mW1})\right) \\[2ex]
\vdots & \vdots & \vdots \\[2ex]
-\dfrac{\sigma_{W1}}{c_{Wi}}\sin(\theta_{mWi}) & \dfrac{\sigma_{W1}}{c_{Wi}}\cos(\theta_{mWi}) & \dfrac{\sigma_{W1}}{c_{Wi}}\left(x_{Wi}\cos(\theta_{mWi}) + y_{Wi}\sin(\theta_{mWi})\right) - 1 \\[2ex]
\dfrac{\tau_{W1}}{r_{Wi}}\cos(\theta_{mWi}) & \dfrac{\tau_{W1}}{r_{Wi}}\sin(\theta_{mWi}) & \dfrac{\tau_{W1}}{r_{Wi}}\left(x_{Wi}\sin(\theta_{mWi}) - y_{Wi}\cos(\theta_{mWi})\right) \\[2ex]
\vdots & \vdots & \vdots \\[2ex]
-\dfrac{\sigma_{W1}}{c_{WN}}\sin(\theta_{mWN}) & \dfrac{\sigma_{W1}}{c_{WN}}\cos(\theta_{mWN}) & \dfrac{\sigma_{W1}}{c_{Wi}}\left(x_{WN}\cos(\theta_{mWN}) + y_{WN}\sin(\theta_{mWN})\right) - 1 \\[2ex]
\dfrac{\tau_{W1}}{r_{WN}}\cos(\theta_{mWN}) & \dfrac{\tau_{W1}}{r_{WN}}\sin(\theta_{mWi}) & \dfrac{\tau_{W1}}{r_{WN}}\left(x_{WN}\sin(\theta_{mWN}) - y_{Wi}\cos(\theta_{mWN})\right)
\end{bmatrix}$$

Calculate, $C_f^{\#}$, the force projection matrix, a generalized left inverse of $C$. Any generalized left inverse will work. By judicious choice of a particular $C_f^{\#}$ various behaviors can be implemented. An example which is particularly useful is:

$$C_f^{\#} = (C^T C)^{-1} C^T$$

which minimizes, in a least squares way, the axis torques. The axis motion vector containing the desired steering axis torque and desired translation axis torque $[\gamma_{dWi}, \rho_{dWi}]^T$ is then:

$$\bar{m}_a = C_f^{\#^T} \bar{m}_d$$

where $\bar{m}_d$ is the 3-DOF force torque input vector. For control of a base with a known dynamic model, one can dynamically decouple the undesired forces by calculating the axis torques with the following expression:

$$\bar{m}_a = C_f^{\#^T}\left(\Lambda \bar{m}_d + \mu\right)$$

where $\bar{m}_d$ is the 3 DOF acceleration input vector and

$$\bar{m}_a = \left[\gamma_{dW1}, \rho_{dW1}, \ldots, \gamma_{dWi}, \rho_{dWi}, \ldots, \gamma_{dWN}, \rho_{dWN}\right]^T$$

are the axis torques.

When controlling the base in 3 DOF it is desirable to eliminate or greatly reduce the undesired motion of the vehicle due to the dynamic effects of the various motions of the 2-DOFWs. This can be accomplished by using $\Lambda$ and $\mu$ in the above equations as found from the dynamic model of the base. It is well understood by those skilled in the art that the dynamic model, that is defined by the dynamic equations of a system (base) can be found and written as:

$$F = \Lambda \ddot{x} + \mu$$

where $F$ is the 3 DOF linear and rotational force on the base, $\Lambda$ is the mass matrix, $\ddot{x}$ is the acceleration of the base in 3DOF, and $\mu$ is the centripetal, coriolis, and gravity vector. It is possible to control a base with unknown dynamics by using an estimate of the dynamic parameters such as:

$$\Lambda = \begin{bmatrix} 1 & 0 & 0 \\ 0 & 1 & 0 \\ 0 & 0 & 1 \end{bmatrix}, \quad \mu = \begin{bmatrix} 0 \\ 0 \\ 0 \end{bmatrix}$$

but the base will not produce the desired motion as closely as when the values of the dynamic parameters for the actual base are used.

Thus, by concatenating all N wheel motion pairs described above, we create a desired axis motion vector which is 2N in length.

Section 3 - Calculating the Control Envelopes

The control envelope for an axis describes the possible motion an axis can perform within a fixed time. For a 2-DOFW $i$ with no caster ($c_{Wi} = 0$) we must calculate the steering axis *position* lower and upper bounds ($s_{lWi}$ and $s_{uWi}$) and the translation axis *velocity* lower and upper bounds ($\dot{t}_{lWi}$ and $\dot{t}_{uWi}$). First calculating the steering position lower bound, we assume that the axis should move based on a value proportional to the error ($s_{dWi} - s_{mWi}$) scaled by gain value ($k_p$) minus a small tolerance ($e_s$) *or* based on the maximum (negative) acceleration possible for the steering axis ($\ddot{s}_{maxWi}$)(the measured position and velocity ($s_{mWi}$ and $\dot{s}_{mWi}$) are required to calculate the position as a result of maximum acceleration), whichever is greater:

$$s_{lWi} = \max(s_{mWi} + k_p(s_{dWi} - s_{mWi}) - e_s, s_{mWi} + \dot{s}_{mWi}\Delta t - \tfrac{1}{2}\ddot{s}_{maxWi}\Delta t^2)$$

Calculating the upper bound, we similarly assume the axis should move based on a value proportional to the error scaled by a gain value *plus* a small tolerance *or* based on the maximum (*positive*) acceleration, whichever is *lesser*.

$$s_{uWi} = \min(s_{mWi} + k_p(s_{dWi} - s_{mWi}) + e_s, \ s_{mWi} + \dot{s}_{mWi}\Delta t + \tfrac{1}{2}\ddot{s}_{maxWi}\Delta t^2)$$

Calculating the lower bound of the translation axis velocity, we assume the control envelope is determined by either maximum (negative) acceleration, or by the maximum possible (negative) velocity of the translation axis ($\dot{t}_{maxWi}$), whichever is greater.

$$\dot{t}_{lWi} = \max(\dot{t}_{mWi} - \ddot{t}_{maxWi}\Delta t, \ -\dot{t}_{maxWi})$$

Calculating the upper bound, we similarly assume the control envelope is determined by either the maximum (*positive*) acceleration, or by the maximum possible (*positive*) velocity of the translation axis, whichever is *lesser*.

$$\dot{t}_{uWi} = \min(\dot{t}_{mWi} + \ddot{t}_{maxWi}\Delta t, \ \dot{t}_{maxWi})$$

Once these values have been determined, the desired motion [$s_{dWi}, \dot{t}_{dWi}$] lies within the control envelope for $\Delta t$ time duration if and only if

$$s_{dWi} \geq s_{lWi} \text{ and } s_{dWi} \leq s_{mWi}$$

or

EP 1 037 129 A1

$$s_{dWi} \leq s_{uWi} \text{ and } s_{dWi} \geq s_{mWi}$$

For a 2-DOFW *i* with caster ($c_{Wi} \neq 0$), when a velocity based low level controller is used, we must calculate the steering axis velocity lower and upper bounds ($s_{lWi}$ and $s_{uWi}$) and translation axis velocity lower and upper bounds ($\dot{t}_{lWi}$ and $\dot{t}_{uWi}$). Calculating the lower bound of the steering axis velocity, we assume the control envelope is determined by either maximum (negative) acceleration ($\ddot{s}_{maxWi}$), or by the maximum possible (negative) velocity of the translation axis ($\dot{s}_{maxWi}$), whichever is greater.

$$\dot{s}_{lWi} = \max(\dot{s}_{mWi} - \ddot{s}_{\max Wi}\Delta t, \; -\dot{s}_{\max Wi})$$

Calculating the upper bound, we similarly assume the control envelope is determined by either the maximum (*positive*) acceleration, or by the maximum possible (*positive*) velocity of the steering axis, whichever is *lesser*.

$$\dot{s}_{uWi} = \min(\dot{s}_{mWi} + \ddot{s}_{\max Wi}\Delta t, \; \dot{s}_{\max Wi})$$

Calculating the translation velocity lower and upper bounds is the same for 2-DOFWs with caster.

$$\dot{t}_{lWi} = \max(\dot{t}_{mWi} - \ddot{t}_{\max Wi}\Delta t, \; -\dot{t}_{\max Wi})$$

$$\dot{t}_{uWi} = \min(\dot{t}_{mWi} + \ddot{t}_{\max Wi}\Delta t, \; \dot{t}_{\max Wi})$$

Once these values have been determined, the desired motion [$\dot{s}_{dWi}, \dot{t}_{dWi}$] lies within the control envelope for $\Delta t$ time duration if and only if

$$\dot{s}_{lWi} \leq \dot{s}_{dWi} \leq \dot{s}_{uWi}$$

and

$$\dot{t}_{lWi} \leq \dot{t}_{dWi} \leq \dot{t}_{uWi}$$

For a 2-DOFW *i* with caster ($c_{Wi} \neq 0$), when a torque based low level controller is used, we must determine if the motion input vector ($\vec{m}_d$) is within the upper bound of the actuator torque ($\gamma_{uWi}, \rho_{uWi}$) and the lower bound of the actuator torque ($\gamma_{lWi}, \rho_{lWi}$):

$$\gamma_{lWi} \leq \gamma_{dWi} \leq \gamma_{uWi}$$

$$\rho_{lWi} \leq \rho_{dWi} \leq \rho_{uWi}$$

Thus we can determine for a given increment in time ($\Delta t$) the possible motion for each axis (control envelope) of each 2-DOFW, and for a given axis motion vector, whether it lies within the control envelopes.

Section 4 - Calculating the Modified Axis Motion Vector

We describe an algorithm that can be applied when the desired axis motion vector mapped from the input vector does not lie within the control envelopes of all axes. Given a desired base motion input vector ($\vec{m}_d$) and a current estimated base motion vector ($\vec{m}_e$) (calculated in Section 5) we can determine a modified motion vector that is closest to the desired input vector while staying within the control envelopes of all axes.

11

When a velocity based low level controller is used, we begin by defining a parametric line $m_l(\lambda)$ as a function of $\lambda$, which varies between 0 and 1:

$$\bar{m}_l(\lambda) = \lambda(\bar{m}_d - \bar{m}_e) + \bar{m}_e$$

$$0 \le \lambda \le 1$$

Evaluating $m_l(0)$ results in $\vec{m}_e$, which is the current base motion vector. Evaluating $m_l(1)$ results in $\vec{m}_d$, which is the desired input vector. Thus, we define an algorithm that finds a value of $\lambda$ whose $m_l(\lambda)$ mapping is closest to the desired input vector *and* lies within the control envelopes when mapped to the axis motion vector. The basic idea is to increment $\lambda$ by a small amount ($\delta$) until the mapping of $m_l(\lambda)$ to the axis motion vector lies within the control envelopes. This becomes the modified axis motion vector.

When a torque based low level controller is used, we again begin by defining a parametric line $m_l(\lambda)$ as a function of $\lambda$, which varies between 0 and 1, where now:

$$\bar{m}_l(\lambda) = \lambda \bar{m}_d$$

$$0 \le \lambda \le 1$$

Evaluating $m_l(0)$ results in zero torque command such that the base continues its current base motion vector. Evaluating $m_l(1)$ results in $\vec{m}_d$, which is the desired input vector. Thus, we define an algorithm that finds a value of $\lambda$ whose $m_l(\lambda)$ mapping is closest to the desired input vector *and* lies within the control envelopes when mapped to the axis motion vector. The basic idea is to increment $\lambda$ by a small amount ($\delta$) until the mapping of $m_l(\lambda)$ to the axis motion vector lies within the control envelopes. This becomes the modified axis motion vector.

Using: the appropriate equation for $m_l(\lambda)$ from above, and with $0 < \delta << 1$ :

> begin procedure
>
> $\qquad \lambda = \delta$
>
> $\qquad$ while $\bar{m}_l(\lambda)$ mapped to axis motion vector (Section 2) lies within control envelopes of all axes of each 2-DOFW (Section 3) do
>
> $\qquad\qquad \lambda = \lambda + \delta$
>
> $\qquad$ end
>
> $\qquad\qquad \bar{m}_m = \bar{m}_l(\lambda)$
>
> $\qquad\qquad$ return axis motion vector mapping of $\bar{m}_m$
>
> $\qquad$ end

Note, there are many possible ways to implement the same algorithm. This method is presented because of its simplicity.

Section 5 - Estimating the Motion of the Mobile Base

Here, we describe how to estimate the motion of the base during the discrete time interval $\Delta t$. First, we calculate the new apparent wheel positions with respect to the base coordinates. These new coordinates are expressed as $x'_{wi}$ and $y'_{wi}$ for wheel i. For wheels with no caster ($c_{Wi} = 0$), we begin by calculating the measured steering angle as in Section 1:

$$\theta_{mWi} = \frac{s_{mWi}}{\sigma_{Wi}}$$

We proceed by calculating the measured translation distance ($\Delta t_{mWi}$) since the beginning of the previous control cycle:

$$\Delta t_{mWi} = (t_{mWi} - `t_{mWi})$$

Here, we introduce $`t_{mWi}$ which is the measured translation axis position at the beginning of the previous control cycle expressed in encoders. The apparent wheel positions are then simply the wheel positions in base coordinates ($x_{Wi}$ and $y_{Wi}$) plus the calculated motion:

$$x'_{Wi} = x_{Wi} + \Delta t_{mWi} \frac{r_{Wi}}{\tau_{Wi}} \cos(\theta_{mWi})$$

$$y'_{Wi} = y_{Wi} + \Delta t_{mWi} \frac{r_{Wi}}{\tau_{Wi}} \sin(\theta_{mWi})$$

For wheels with caster ($c_{Wi} \neq 0$), we similarly calculate the steering angle, $\theta_{mWi}$, and the apparent wheel motion as a result of the translation axis, $\Delta t_{mWi}$. However, because of the caster offset, steering motion results in apparent wheel motion as well. Here we introduce $`s_{mWi}$ which is the measured steering axis position at the beginning of the previous control cycle expressed in encoders:

$$\Delta s_{mWi} = (s_{mWi} - `s_{mWi})$$

The apparent wheel motion is then calculated by a rotation with respect to the steer angle:

$$x'_{Wi} = x_{Wi} + \Delta t_{mWi} \frac{r_{Wi}}{\tau_{Wi}} \cos(\theta_{mWi}) - \Delta s_{mWi} \frac{c_{Wi}}{\sigma_{Wi}} \sin(\theta_{mWi})$$

$$y'_{Wi} = y_{Wi} + \Delta s_{mWi} \frac{c_{Wi}}{\sigma_{Wi}} \cos(\theta_{mWi}) + \Delta t_{mWi} \frac{r_{Wi}}{\tau_{Wi}} \sin(\theta_{mWi})$$

We then use the apparent wheel motion to calculate the amount of base rotation $\Delta\psi_e$ since the last control cycle. We do this by calculating the rotation for each possible wheel pair and averaging the results:

$$M = C(N,2)$$

$$\Delta\psi_e = \frac{1}{M} \sum_{\forall\{j,k\}} \arctan2(y'_{Wk} - y'_{Wj}, x'_{Wk} - x'_{Wj}) - \arctan2(y_{Wk} - y_{Wj}, x_{Wk} - x_{Wj})$$

13

The above equation is summed over all possible wheel pairs *j,k*. That is, there are $C(N,2)$($N$ choose 2 combinatorial) possible wheel combinations.

Since the position of a mobile base having only two wheels (i.e. N = 2) can be estimated with feedback from only three of its four motion axes (the fourth one being redundant), there are many other ways to estimate the motion of the base. The preceding formula can be used for bases having only two wheels, but there will only be one wheel pair to "average." As the number of wheels used on a mobile base goes up (i.e. as N increases), the better the above estimation algorithm gets.

We now calculate the change in x and y coordinates ($\Delta x_e$ and $\Delta y_e$) by evaluating the following equations:

$$\Delta x_e = \frac{1}{N}\sum_{i=1}^{N}(x'_{Wi} + y_{Wi}\Delta\psi_e)$$

$$\Delta y_e = \frac{1}{N}\sum_{i=1}^{N}(y'_{Wi} - x_{Wi}\Delta\psi_e)$$

The estimated base motion vector can be calculated by dividing by the time increment $\Delta t$:

$$\bar{m}_e = \tfrac{1}{\Delta t}\left[\Delta x_e, \Delta y_e, \Delta\psi_e\right]^T$$

A similar method to calculate $\bar{m}_e$, which directly averages the measured readings with a more compact notation, uses the matrix, $C$, introduced above:

$$\bar{m}_e = \tfrac{1}{\Delta t}C_x^{\#}\left[\Delta s_{mW1}, \Delta t_{mW1}, \ldots, \Delta s_{mWi}, \Delta t_{mWi}, \ldots, \Delta s_{mWN}, \Delta t_{mWN}\right]^T$$

where $C_x^{\#}$, the velocity estimation matrix, is a generalized left inverse of $C$. Any generalized left inverse will work. By judicious choice of a particular $C_x^{\#}$ various behaviors can be implemented. An example which is particularly useful is:

$$C_x^{\#} = (C^T C)^{-1} C^T$$

which minimizes, in a least squares way, the difference in the measured motion of the axis sensors and the motion of axis sensors on an ideal model of the PCV which perfectly obeys the velocity relationship described by $C$.

The final step in motion estimation is determining the "summed-up" position of the mobile base in fixed world coordinates. This is accomplished by adding the rotation angle change $\Delta\psi_e$, to the existing angle estimate($\psi_{eB}$). Similarly $x_{eB}$ and $y_{eB}$ are calculated by adding to the existing estimates the rotated change in x and y coordinates with respect to $\psi_{eB}$ :

$$\psi_{eB} = \psi_{eB} + \Delta\psi_e$$

$$x_{eB} = x_{eB} + \Delta x_e\cos(\psi_{eB}) - \Delta y_e\sin(\psi_{eB})$$

$$y_{eB} = y_{eB} + \Delta y_e\cos(\psi_{eB}) - \Delta x_e\sin(\psi_{eB})$$

Section 6 - Summary

The present invention, as described above, provides a method and apparatus for controlling the motion of a mobile base with increased accuracy and maneuverability. In its preferred embodiment, the present invention is used on a mobile robot base having three wheels each with a predetermined amount of caster. The mobile robot is controlled by an off-board host processor (as shown in Figure 2.) The host processor sends command signals and receives motion feedback from an onboard supervisory controller by radio, cable, infrared, or similar type of link. The motion control signals are mapped to axis control signals by the supervisory controller and sent to six low-level controllers. Each of the six low level controllers corresponds to either a steering axis or translation axis for one of the three wheels. Each of the low level controllers in turn sends an axis control signal to an associated servo amplifier, which provides the proper voltage and current to drive the respective axis motor. Each of the six motors has an encoder, which provides motor position feedback to both the low-level controller and the supervisory controller.

The host processor and supervisory controller are preferably microprocessors that are commonly used for embedded control. Propriety software code is written preferably in C programming language to implement the inventive control method on the microprocessors and low level controllers.

The inventive method and apparatus can be utilized with other configurations (not shown), such as on drive systems for forklifts or automated guided vehicles (AGV's.) Also, the mobile base described above can be inverted with the positions of the mobile base and the surface it rolls on transposed. In other words, two degree of freedom wheels can be mounted pointed upward on a stationary base, and can translate and rotate a horizontal surface resting on the wheels. In another possible application (not shown), multiple bases, each having single or multiple wheels, can be pivotably linked together in a snake-fashion to form a non-rigid base which is controlled by the inventive method.

The above descriptions and drawings are for illustrative purposes only, and are not exhaustive of possible alternate embodiments of the invention. It is to be understood that the present invention is not limited to the sole embodiments described above and illustrated herein, but encompasses any and all variations falling within the scope of the appended claims.

**Claims**

1. A method of calculating a desired axis motion of a wheeled base from an overall desired motion of the wheeled base, the wheeled base having at least two wheels, each wheel having two axis which define two degrees of freedom for that wheel, each wheel having an attachment point on the base, the method comprising the steps of:

   receiving an inputted motion vector for an overall desired motion of the wheeled base;
   calculating from the inputted vector a desired two dimensional motion vector for each of the attachment points;
   mapping the motion vector of one of the attachment points to an axis motion for each of the two axes associated with the one attachment point, so that driving the two axes of the associated wheel will result in the desired base motion of the one attachment point; and
   repeating the previous step for each of the attachment points.

2. A method of calculating a desired axis motion as recited in claim 1, wherein the step of calculating the two dimensional motion vector for each of the attachment points is characterized by the equations:

$$\dot{x}_{dWi} = \dot{x}_d - y_{wi}\dot{\psi}_d$$

$$\dot{y}_{dWi} = \dot{y}_d + x_{wi}\dot{\psi}_d$$

wherein

$\dot{x}_{dWi}$ is the desired wheel attachment point velocity in the x-direction of the base coordinates for each wheel $i$ in meters per second,
$\dot{x}_d$ is the desired base velocity in the x-direction of the base coordinates in meters per second,
$\dot{\psi}_d$ is the desired rotational velocity in base coordinates in radians per second,
$\dot{y}_{dWi}$ is the desired wheel attachment point velocity in the y direction of the base coordinates for each wheel $i$ in meters per second,
$\dot{y}_d$ is the desired base velocity in the x-direction of the base coordinates in meters per second,
$x_{Wi}$ is the x-component of the wheel attachment point of wheel $i$ in base coordinates in meters, and
$y_{Wi}$ is the y-component of the wheel attachment point of wheel $i$ in base coordinates in meters.

3. A method of calculating a desired axis motion as recited in claim 1, wherein all of the wheels of the base have a caster that is equal to zero and the steps of mapping the motion vectors of the attachment points to axis motions is characterized by the equations:

$$\theta_{dWi} = \arctan2\left(\dot{y}_{dWi}, \dot{x}_{dWi}\right)$$

$$\dot{\mu}_{dWi} = \sqrt{\dot{x}_{dWi}^2 + \dot{y}_{dWi}^2}$$

$$s_{dWi} = \sigma_{Wi}\theta_{dWi}$$

$$\dot{t}_{dWi} = \frac{\tau_{Wi}}{r_{Wi}}\dot{\mu}_{dWi}$$

wherein

$\theta_{dWi}$ is the desired steering angle for 2-DOFW $i$, in radians,
$\dot{y}_{dWi}$ is the desired wheel attachment point velocity in the y direction of the base coordinates for each wheel $i$ in meters per second,
$\dot{x}_{dWi}$ is the desired wheel attachment point velocity in the x-direction of the base coordinates for each wheel $i$ in meters per second,
$\dot{\mu}_{dWi}$ is the desired velocity magnitude for wheel $i$ in meters per second,
$s_{dWi}$ is the desired steering angle with respect to base coordinates of wheel $i$ in encoders,
$\sigma_{Wi}$ is the steering axis "encoder pitch" for the steering axis of 2-DOFW $i$ expressed in encoders per radian,
$\dot{t}_{dWi}$ is the desired velocity of the translation axis for wheel $i$ in encoders per second,
$\tau_{Wi}$ is the translation axis "encoder pitch" for wheel $i$ in encoders per radian, and
$r_{Wi}$ is the wheel radius of wheel $i$ in meters per radian.

4. A method of calculating a desired axis motion as recited in claim 1, wherein all of the wheels of the base have a caster that is not equal to zero and the steps of mapping the motion vectors of the attachment points to axis motions is characterized by the equations:

$$\theta_{mWi} = \frac{s_{mWi}}{\sigma_{Wi}};$$

$$\dot{s}_{dWi} = \frac{\sigma_{Wi}}{c_{Wi}}\left(\dot{y}_{dWi}\cos(\theta_{mWi}) - \dot{x}_{dWi}\sin(\theta_{mWi})\right) - \dot{\psi}_d; \text{ and}$$

$$\dot{t}_{dWi} = \frac{\tau_{Wi}}{r_{Wi}}\left(\dot{x}_{dWi}\cos(\theta_{mWi}) + \dot{y}_{dWi}\sin(\theta_{mWi})\right),$$

wherein

$\theta_{mWi}$ is the measured angle of the steering axis of wheel $i$ with respect to base coordinates in radians,
$s_{mWi}$ is the measured angle of wheel $i$ with respect to base coordinates in encoders,
$\sigma_{Wi}$ is the steering axis "encoder pitch" for the steering axis of 2-DOFW-i expressed in encoders per radian,
$\dot{s}_{dWi}$ is the desired steering axis velocity of wheel $i$ in encoders per second,
$c_{Wi}$ is the amount of caster offset in meters per radian,
$\dot{y}_{dWi}$ is the desired wheel attachment point velocity in the y direction of the base coordinate for each wheel $i$ in meters per second,
$\dot{x}_{dWi}$ is the desired wheel attachment point velocity in the x-direction of the base coordinates for each wheel, $i$ in meters per second,
$\dot{\psi}_d$ is the desired base rotation velocity in radians per second,
$\dot{t}_{dWi}$ is the desired velocity of the translation axis for wheel $i$ in encoders per second,
$\tau_{Wi}$ is the encoder pitch for 2DOFW $i$ expressed in encoders per radians, and
$r_{Wi}$ is the radius of the 2DOFW $i$ in meters per radian.

**5.** A method of providing a control envelope for axes on a wheeled base, the wheeled base having at least two wheels, each wheel having two axes which define two degrees of freedom for that wheel, the control envelope ensuring that none of the wheel axes are commanded to move in a manner that they are not capable, the method comprising the steps of:

defining for each of the axes of each of the wheels a maximum possible range of motion that will be permitted during an allotted control period;
receiving an inputted motion vector for an overall desired motion of the wheeled base;
calculating from the inputted vector a desired axis motion for each of the axes of each of the wheels, so that driving all of the axes will result in the overall desired motion of the base;
determining if any of the desired axis motions are not within the permitted range of motion previously defined for that axis; and
modifying as little as possible the overall desired motion of the base if required by the previous step such that all of the corresponding desired axis motions are within the permitted ranges of axis motion.

**6.** A method of estimating rotation of a wheeled base relative to a surface during a discrete time interval $\Delta t$, the base having at least two wheels each pivotably and rotatably mounted thereon for contacting the surface and driving the base and surface relative to one another, the method comprising the steps of:

calculating an apparent motion for each of the wheels during the time interval $\Delta t$;
calculating a rotation of the base for each possible pair of the wheels based on the apparent motion calculated for each of the wheels; and
averaging the results of the previous step.

**7.** A method of estimating rotation of a wheeled base as recited in claim 6, wherein the step of calculating an apparent motion of each wheel is represented by the equations:

$$x'_{Wi} = x_{Wi} + \Delta t_{mWi}\cos(\theta_{mWi}) - \Delta s_{mWi}\sin(\theta_{mWi}); \text{ and}$$

$$y'_{Wi} = y_{Wi} + \Delta s_{mWi}\cos(\theta_{mWi}) + \Delta t_{mWi}\sin(\theta_{mWi}),$$

wherein

$x'_{wi}$ is the x-component of the attachment point of wheel *i* after base motion during one control cycle in meters,
$x_{Wi}$ is the x-component of the wheel attachment point of wheel *i* in base coordinates in meters,
$\Delta t_{mWi}$ is the measured motion of the translation axis of wheel *i* during one control cycle expressed in meters,
$\theta_{mWi}$ is the measured angle of the steering axis of wheel *i* with respect to base coordinates in radians,
$\Delta s_{mWi}$ is the measured motion of the steering axis of wheel *i* during one control cycle expressed in meters,
$y'_{wi}$ is the y-component of the attachment point of wheel *i* after base motion during one control cycle in meters, and
$y_{Wi}$ is the y-component of the wheel attachment point of wheel *i* in base coordinates in meters.

**8.** A method of estimating rotation of a wheeled base as recited in claim 7, wherein each wheel has a steering axis and a rolling or translation axis, the two axis for each of the wheels being offset from one another such that the caster does not equal zero.

**9.** A method of estimating rotation of a wheeled base as recited in claim 7, wherein each wheel has a steering axis and a rolling or translation axis, the two axis for each of the wheels intersecting such that the caster equals zero.

**10.** A method of estimating rotation of a wheeled base as recited in claim 6, wherein the steps of calculating a rotation of the base for each possible pair of the wheels and averaging the results are represented by the equation:

$$\Delta\psi_e = \frac{1}{M}\sum_{\forall\{j,k\}}\arctan2\left(y'_{Wk} - y'_{Wj}, x'_{Wk} - x'_{Wj}\right) - \arctan2\left(y_{Wk} - y_{Wj}, x_{Wk} - x_{Wj}\right),$$

wherein

$\Delta\psi_e$ is the calculated rotation change in radians,

m is the number of unique pair combinations of N wheels,

j and k are index variables of a possible wheel pair combination,

$y'_{Wk}$ is the y-component of the attachment point of wheel k after base motion during one control cycle in meters,

$y'_{Wj}$ is the y-component of the attachment point of wheel j after base motion during one control cycle in meters,

$x'_{Wk}$ is the x-component of the attachment point of wheel k after base motion during one control cycle in meters,

$x'_{Wj}$ is the x-component of the attachment point of wheel j after base motion during one control cycle in meters,

$y_{Wk}$ is the y-component of the wheel attachment point of wheel k in base coordinates in meters,

$y_{Wj}$ is the y-component of the wheel attachment point of wheel j in base coordinates in meters,

$x_{Wk}$ is the x-component of the wheel attachment point of wheel k in base coordinates in meters, and

$x_{Wj}$ is the x-component of the wheel attachment point of wheel j in base coordinates in meters.

**11.** A method of calculating position and orientation of a wheeled base relative to a world coordinate system fixed to a surface, the base having a base coordinate system fixed thereto and at least two wheels each pivotably and rotatably mounted to the base at an attachment point for contacting the surface and driving the base and surface relative to one another, the method comprising the steps of:

calculating a steering angle for each of the wheels;

calculating a measured translation distance for each of the wheels traveled over a time $\Delta t$ elapsed during a control cycle;

calculating an apparent motion for each of the wheels based on the steering angle and measured translation calculated;

calculating an apparent position in base coordinates for each of the wheels by adding the calculated motion to the wheel attachment point at the beginning of the control cycle;

calculating a rotation of the base for each possible pair of the wheels based on the apparent motion calculated for each of the wheels;

calculating a total change in base rotation by averaging the results of the previous step;

calculating a total change in translation coordinates by averaging the apparent motion of each of the wheels, taking into account the base rotation calculated in the previous step since the beginning of the control cycle;

calculating a summed-up position and orientation of the mobile base in the fixed world coordinates by adding the total change in base angle to an existing angle estimate and adding the total change in translation coordinates to an existing estimate of translation coordinates.

**12.** A method of calculating position and orientation of a wheeled base as recited in claim 11, wherein the step of calculating the total change in base rotation is characterized by the equation:

$$\Delta\psi_e = \frac{1}{M}\sum_{\forall\{j,k\}}\arctan2\left(y'_{Wk}-y'_{Wj},x'_{Wk}-x'_{Wj}\right) - \arctan2\left(y_{Wk}-y_{Wj},x_{Wk}-x_{Wj}\right),$$

wherein

$\Delta\psi_e$ is the calculated rotation change in radians,

m is the number of unique pair combinations of N wheels,

j and k are index variables of a possible wheel pair combination,

$y'_{Wk}$ is the y-component of the attachment point of wheel k after base motion during one control cycle in meters,

$y'_{Wj}$ is the y-component of the attachment point of wheel j after base motion during one control cycle in meters,

$x'_{Wk}$ is the x-component of the attachment point of wheel k after base motion during one control cycle in meters,

$x'_{Wj}$ is the x-component of the attachment point of wheel j after base motion during one control cycle in meters,

$y_{Wk}$ is the y-component of the wheel attachment point of wheel k in base coordinates in meters,

$y_{Wj}$ is the y-component of the wheel attachment point of wheel j in base coordinates in meters,

$x_{Wk}$ is the x-component of the wheel attachment point of wheel k in base coordinated in meters, and

$x_{Wj}$ is the x-component of the wheel attachment point of wheel j in base coordinated in meters.

13. A method of calculating position and orientation of a wheeled base as recited in claim 11, wherein the step of calculating the total change in translation coordinates is characterized by the equations:

$$\Delta x_e = \frac{1}{N} \sum_{i=1}^{N} (x'_{Wi} + y_{Wi} \Delta \psi_e)$$

$$\Delta y_e = \frac{1}{N} \sum_{i=1}^{1} (y'_{Wi} - x_{Wi} \Delta \psi_e)$$

wherein

$\Delta x_e$ is the estimated change of the base location in the x-direction in base coordinates since the previous control cycle in meters,
N is the number of wheels,
i is an index variable,
$x'_{Wi}$ is the x-component of the attachment point of wheel *i* after base motion during one control cycle in meters,
$x_{Wi}$ is the x-component of the wheel attachment point of wheel *i* in base coordinates in meters,
$y_{Wi}$ is the y-component of the wheel attachment point of wheel *i* in base coordinate in meters,
$\Delta \psi_e$ is the estimated rotational change of the base location in base coordinates since the previous control cycle in meters,
$\Delta y_e$ is the estimated change of the base location in the y-direction in base coordinates since the previous control cycle in meters, and
$y'_{Wi}$ is the y-component of the attachment point of wheel *i* after base motion during one control cycle in meters.

14. A method of calculating position and orientation of a wheeled base as recited in claim 11, wherein the step of calculating a summed-up position and orientation of the mobile base is characterized by the equations:

$$\psi_{eB} = \psi_{eB} + \Delta \psi_e,$$

$$x_{eB} = x_{eB} + \Delta x_e \cos(\psi_{eB}) - \Delta y_e \sin(\psi_{eB}), \text{ and}$$

$$y_{eB} = y_{eB} + \Delta y_e \cos(\psi_{eB}) + \Delta x_e \sin(\psi_{eB})$$

wherein

$\psi_{eB}$ is the estimated rotational position of the base coordinate frame origin with respect to a fixed world coordinate frame,
$\Delta \psi_e$ is the estimated rotational change of the base location in base coordinates since the previous control cycle in meters,
$x_{eB}$ is the estimated position of the base coordinate frame origin in the x-direction of a fixed world coordinate frame,
$\Delta x_e$ is the estimated change of the base location in the x-direction in base coordinates since the previous control cycle in meters,
$\Delta y_e$ is the estimated change of the base location in the y-direction in base coordinates since the previous control cycle in meters, and
$y_{eB}$ is the estimated position of the base coordinate frame origin in the y-direction of a fixed world coordinate frame.

15. A method for controlling the motion of a wheeled base with respect to a surface, the base having a base coordinate system fixed thereto and at least two wheels each pivotably and rotatably mounted to the base at an attachment point for contacting the surface and driving the base and surface relative to one another, each wheel having a plurality of axes, the method comprising the steps of:

reading an input vector from a host processor;
mapping the input vector to a desired axis motion vector for each of the axes;
sending the desired axis motion vector to an axis controller for each of the axes;

**19**

estimating a motion of the base traveled during a discrete time interval $\Delta t$;

calculating a position and an orientation of the base in a set of world coordinates.

**16.** A method for controlling the motion of a wheeled base as recited in claim 15, wherein the steps of estimating a motion of the base and calculating a position and orientation of the base further comprise the steps of:

calculating a steering angle for each of the wheels;

calculating a measured translation distance for each of the wheels traveled over a time $\Delta t$ elapsed during a control cycle;

calculating an apparent motion for each of the wheels based on the steering angle and measured translation calculated;

calculating an apparent position in base coordinates for each of the wheels by adding the calculated motion to the wheel attachment point at the beginning of the control cycle

calculating a rotation of the base for each possible pair of the wheels based on the apparent motion calculated for each of the wheels;

calculating a total change in base rotation by averaging the results of the previous step;

calculating a total change in translation coordinates by averaging the apparent motion of each of the wheels, taking into account the base rotation calculated in the previous step since the beginning of the control cycle;

calculating a summed-up position and orientation of the mobile base in the fixed world coordinates by adding the total change in base angle to an existing angle estimate and adding a rotated total change in translation coordinates to an existing estimate of translation coordinates.

**17.** A method for controlling the motion of a wheeled base as recited in claim 16, wherein the step of calculating the total change in base rotation is characterized by the equation:

$$\Delta \psi_e = \tfrac{1}{M} \sum_{\forall \{j,k\}} \arctan 2 \left( y'_{Wk} - y'_{Wj}, x'_{Wk} - x'_{Wj} \right) - \arctan 2 \left( y_{Wk} - y_{Wj}, x_{Wk} - x_{Wj} \right),$$

wherein

$\Delta \psi_e$ is the calculated rotation change in radians,

m is the number of unique pair combinations of N wheels,

j and k are index variables of a possible wheel pair combination,

$y'_{Wk}$ is the y-component of the attachment point of wheel k after base motion during one control cycle in meters,

$y'_{Wj}$ is the y-component of the attachment point of wheel j after base motion during one control cycle in meters,

$x'_{Wk}$ is the x-component of the attachment point of wheel k after base motion during one control cycle in meters,

$x'_{Wj}$ is the x-component of the attachment point of wheel j after base motion during one control cycle in meters,

$y_{Wk}$ is the y-component of the wheel attachment point of wheel k in base coordinates in meters,

$Y_{Wj}$ is the y-component of the wheel attachment point of wheel j in base coordinates in meters,

$X_{Wk}$ is the x-component of the wheel attachment point of wheel k in base coordinates in meters, and

$x_{Wj}$ is the x-component of the wheel attachment point of wheel j in base coordinates in meters.

**18.** A method for controlling the motion of a wheeled base as recited in claim 16, wherein the step of calculating the total change in translation coordinates is characterized by the equations:

$$\Delta x_e = \frac{1}{N} \sum_{i=1}^{N} (x'_{Wi} + y_{Wi} \Delta \psi_e); \text{ and}$$

$$\Delta y_e = \frac{1}{N} \sum_{i=1}^{N} (y'_{Wi} - x_{Wi} \Delta \psi_e),$$

wherein

$\Delta x_e$ is the estimated change of the base location in the x-direction in base coordinates since the previous control cycle in meters,

N is the number of wheels,

i is an index variable,

$x'_{Wi}$ is the x-component of the attachment point of wheel *i* after base motion during one control cycle in meters,

$x_{Wi}$ is the x-component of the wheel attachment point of wheel *i* in base coordinates in meters,

$y_{Wi}$ is the y-component of the wheel attachment point of wheel *i* in base coordinate in meters,

$\Delta \psi_e$ is the estimated rotational change of the base location in base coordinates since the previous control cycle in meters,

$\Delta y_e$ is the estimated change of the base location in the y-direction in base coordinates since the previous control cycle in meters, and

$y'_{Wi}$ is the y-component of the attachment point of wheel *i* after base motion during one control cycle in meters.

**19.** A method for controlling the motion of a wheeled base as recited in claim 16, wherein the step of calculating a summed-up position and orientation of the mobile base is characterized by the equations:

$$\psi_{eB} = \psi_{eB} + \Delta\psi_e,$$

$$x_{eB} = x_{eB} + \Delta x_e \cos(\psi_{eB}) - \Delta y_e \sin(\psi_{eB}), \text{ and}$$

$$y_{eB} = y_{eB} + \Delta y_e \cos(\psi_{eB}) + \Delta x_e \sin(\psi_{eB})$$

wherein

$\psi_{eB}$ is the estimated rotational position of the base coordinate frame origin with respect to a fixed world coordinate frame,

$\Delta\psi_e$ is the estimated rotational change of the base location in base coordinates since the previous control cycle in meters,

$x_{eB}$ is the estimated position of the base coordinate frame origin in the x-direction of a fixed world coordinate frame,

$\Delta x_e$ is the estimated change of the base location in the x-direction in base coordinates since the previous control cycle in meters,

$\Delta y_e$ is the estimated change of the base location in the y-direction in base coordinates since the previous control cycle in meters, and

$y_{eB}$ is the estimated position of the base coordinate frame origin in the y-direction of a fixed world coordinate frame.

**20.** A method for controlling the motion of a wheeled base with respect to a surface, the base having a base coordinate system fixed thereto and at least two wheels each pivotably and rotatably mounted to the base for contacting the surface and driving the base and surface relative to one another, each wheel having a plurality of axes, the method comprising the steps of:

reading an input vector from a host processor;

mapping the input vector to a desired axis motion vector for each of the axes;

calculating a control envelope for each of the axes;

determining whether the desired axis motion vector lies within the control envelope for each of the axes;

calculating a modified axis motion vector for each of the axes in which the desired axis motion vector does not lie within the control envelope;

sending the desired axis motion vector or modified axis motion vector to an axis controller for each of the axes;

estimating a motion of the base traveled during a discrete time interval $\Delta t$;

calculating a position and an orientation of the base in a set of world coordinates; and

repeating the previous steps continuously until commanded to stop.

**21.** A mobile base movable relative to a surface, the base comprising: at least two wheels pivotably and rotatably mounted to the base, each wheel having a steering axis and a rotation axis;

drive means for rotating the wheels along the surface;

steering means for pivoting the wheels with respect to the surface; and

controller means for controlling the motion of the base, wherein the controller means includes means for reading an input vector from a host processor, mapping the input vector to a desired axis motion vector for each of the axes, calculating a control envelope for each of the axes, determining whether the axis motion vector lies within the control envelope for each of the axes, calculating a modified axis motion vector when the axis motion vector does not lie within the control envelope, sending the axis motion vector or modified axis motion vector to an axis controller for each of the axes, estimating a motion of the base traveled during a discrete time interval $\Delta t$, calculating a position and an orientation of the base in a set of world coordinates, and repeating the previous steps continuously until commanded to stop.

22. A mobile base movable relative to a surface, the base comprising:

at least three wheels pivotably and rotatably mounted to the base, each wheel having a steering axis and a rotation axis;

drive means for rotating the wheels along the surface;
first encoder means for sensing the rotation of each of the wheels and outputting a signal for each wheel in response thereto;
steering means for pivoting the wheels with respect to the surface;
second encoder means for sensing the pivoting of each of the wheels and outputting a signal for each wheel in response thereto; and
a processor for estimating a rotation of the base relative to the surface during a discrete time interval $\Delta t$ by receiving the output signals from the first and second encoder means, calculating from the signals an apparent motion for each of the wheels during the time interval $\Delta t$, calculating from the apparent motions a rotation of the base during the time interval $\Delta t$ for each possible pair of wheels, and averaging the results of the calculated rotations.

23. A mobile base movable relative to a surface, the base comprising:

at least two wheels pivotably and rotatably mounted to the base, each wheel having a steering axis and a rotation axis;

drive means for rotating the wheels along the surface;
steering means for pivoting the wheels with respect to the surface;
a controller for supplying power to the drive means and the steering means; and
a processor for sending command signals to the controller and for calculating a control envelope to ensure that commands are not sent to the controller that cannot be executed by the drive means or the steering means, the processor calculating the control envelope by receiving an input motion signal indicating an overall desired motion of the base, calculating from the input signal a desired axis motion for each of the wheel axes that will achieve the overall desired motion of the base, determining if each of the desired axis motions is within an associated range of motion predefined for each of the
axes, and, if required, modifying as little as possible the overall desired motion of the base until all of the corresponding desired axis motions are within the associated predefined ranges of axis motion.

24. A method of providing a control envelope for axes on a wheeled base, the wheeled base having at least two wheels, each wheel having two axes which define two degrees of freedom for that wheel, the control envelope ensuring that none of the wheel axes are commanded to move in a manner that they are not capable, the method comprising the steps of:

defining for each of the axes of each of the wheels a maximum permitted range of torque;
receiving an inputted force vector for an overall desired resultant force of the wheeled base;
calculating from the inputted vector a desired axis torque for each of the axes of each of the wheels, so that driving all of the axes will result in the overall desired force of the base;
determining if any of the desired axis torques are not within the permitted range of torque previously defined for that axis; and
modifying as little as possible the overall desired force input vector of the base if required by the previous step such that all of the corresponding desired axis torques are within the permitted ranges of axis torques.

25. A method of calculating position and orientation of a wheeled base as recited in claim 11, wherein the steps of calculating the total change in rotation and translation coordinates are characterized by the equation:

$$\vec{m}_e = \frac{1}{\Delta t} C_x^{\#} \left[ \Delta s_{mW1}, \Delta t_{mW1}, \ldots, \Delta s_{mWi}, \Delta t_{mWi}, \ldots, \Delta s_{mWN}, \Delta t_{mWN} \right]^T$$

wherein

$\vec{m}_e$ is the estimated mobile base motion in base coordinates.
$\Delta t$ is the time elapsed during a control cycle (s),
$C_x^{\#}$ is the velocity estimation matrix, a generalized left inverse of the constraint matrix,
$\Delta s_{mWi}$ is the measured motion of the steering axis of wheel i during one control cycle,
$\Delta t_{mWi}$ is the measured motion of the translation axis of wheel i during one control cycle, and
N is the number of wheels mounted to the base.

**26.** A mobile base movable relative to a surface, the base comprising:

a main housing;
at least two wheels pivotably and rotatably mounted to the housing, each wheel having a steering axis and a rotation axis with the steering and rotation axes nonintersecting and offset by a known caster distance;
drive means for rotating the wheels to roll along the surface;
steering means for pivoting the wheels and changing their heading with respect to the surface; and
controller means for
reading an input vector from a host processor, wherein the input vector is a three dimensional force torque vector,
reading the steering axis headings,
calculating a desired torque for each steering and rotation axis such that at any given time, the calculated resultant forces on the base reflect the input vector, regardless of the positions of the steering and rotation axes, and

commanding the calculated torque to each steering and rotation axis.

**27.** An apparatus as described in claim 26 wherein the controller means includes a dynamic model such that the controller means compensates for undesired motion of the base due to various motions of the wheels.

**28.** An apparatus as described in claim 26 wherein the calculated torque of each steering and rotation axis is computed from the input vector and a generalized inverse of a constraint matrix, $C$, the constraint matrix being defined by the following kinematic relationship:

$$\vec{m}_a = C \vec{m}_x$$

where $\vec{m}_a$ represents a motion axis vector and $\vec{m}_x$ represents actual mobile base motion.

**29.** An apparatus as described in claim 28 wherein the generalized inverse of $C$ is chosen such that a sum of squares of the axis torques is minimized.

**30.** An apparatus as described in claim 28 wherein the generalized inverse of $C$ is chosen such that a sum of squares of wheel contact forces is minimized.

**31.** An apparatus as described in claim 28 wherein there is an instantaneous power for each of the steering and rotation axes and wherein the generalized inverse of $C$ is chosen such that a sum of the instantaneous powers of all of the axes is minimized.

Steering Axis

Translation Axis

Rwl

## Fig. 1A

Steering Axis

Translation Axis

Cwl

Rwl

## Fig. 1B

Host processor

Mobile base

Supervisory controller

Low-level controller
(2N control loops)

2N servo amplifiers

2N motors

2N encoders

FIG. 2

```
                    ┌──────────────────────┐
                    │   Read input vector   │
                    │  from host processor  │
                    └──────────────────────┘
                              │
                              ▼
                    ┌──────────────────────┐
                    │   Map input vector to │
                    │ desired axis motion vector │
                    │      (Section 2)      │
                    └──────────────────────┘
                              │
                              ▼
                    ┌──────────────────────┐
                    │Calculate control envelopes│
                    │ for each axis (Section 3) │
                    └──────────────────────┘
                              │
                              ▼
              ┌──────────────────────────────┐
              │ Does desired axis motion vector│   NO
              │ lie within control envelopes for├──────┐
              │          all axes?            │       │
              └──────────────────────────────┘       │
                              │                        ▼
                             YES          ┌──────────────────────┐
                              │           │  Calculate modified   │
                              │           │  axis motion vector   │
                              │           │     (Section 4)       │
                              │           └──────────────────────┘
                              │                        │
                              ▼          ◄─────────────┘
                    ┌──────────────────────┐
                    │ Send axis motion vector to │
                    │   low-level controller    │
                    └──────────────────────┘
                              │
                              ▼
                    ┌──────────────────────┐
                    │    Estimate motion    │
                    │      (Section 5)      │
                    └──────────────────────┘
                              │
                              ▼
                    ┌──────────────────────┐
                    │ Calculated position and│
                    │  orientation in world │
                    │ coordinates (Section 5)│
                    └──────────────────────┘
```

FIG. 3

**FIG. 4**

EP 1 037 129 A1

## EUROPEAN SEARCH REPORT

European Patent Office

Application Number

EP 00 30 1786

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 12498 A (LEGRAND RICHARD M ;SLATER JAMES C (US); NOMADIC TECHNOLOGIES INC ()) 26 March 1998 (1998-03-26) | 1-23 | G05D1/02 |
| A | * page 2, line 23 - page 3, line 9 * <br> * page 6, line 14 - page 7, line 8 * <br> * page 14, line 14 - line 27 * <br> * claims 1-21 * <br> * figures 1,2 * | 24-31 | |
| A | US 5 609 216 A (FISHER DAVID E ET AL) 11 March 1997 (1997-03-11) see the whole document | 1 | |
| A | US 4 657 104 A (HOLLAND JOHN M) 14 April 1987 (1987-04-14) see the whole document | 1 | |
| A | DE 197 02 383 A (HONDA MOTOR CO LTD) 14 August 1997 (1997-08-14) * figure 1 * | 24,26 | |

TECHNICAL FIELDS SEARCHED (Int.Cl.7)

G05D
B60B

The present search report has been drawn up for all claims

| Place of search | Date of completion of the search | Examiner |
|---|---|---|
| THE HAGUE | 16 June 2000 | Philippot, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

28

**ANNEX TO THE EUROPEAN SEARCH REPORT
ON EUROPEAN PATENT APPLICATION NO.**

EP 00 30 1786

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2000

| Patent document cited in search report | | Publication date | Patent family member(s) | | Publication date |
|---|---|---|---|---|---|
| WO 9812498 | A | 26-03-1998 | AU<br>EP | 4251597 A<br>0939882 A | 14-04-1998<br>08-09-1999 |
| US 5609216 | A | 11-03-1997 | NONE | | |
| US 4657104 | A | 14-04-1987 | US | 4573548 A | 04-03-1986 |
| DE 19702383 | A | 14-08-1997 | JP<br>US | 9216567 A<br>5925082 A | 19-08-1997<br>20-07-1999 |

EPO FORM P0459

For more details about this annex : see Official Journal of the European Patent Office, No. 12/82